# EUROPÄISCHE PATENTSCHRIFT

(11) **EP 3 636 411 B1**
(45) Veröffentlichungstag und Bekanntmachung des Hinweises auf die Patenterteilung: **08.06.2022**
(21) Anmeldenummer: 19000457.2
(22) Anmeldetag: 08.10.2019
(51) Int. Cl.: B29C 48/335, B29C 48/10, B29C 48/21, B29C 48/18, B29C 48/30

(54) **BLASKOPF UND VERFAHREN ZUR HERSTELLUNG EINER MEHRSCHICHTSCHLAUCHFOLIE**
BLOWHEAD AND METHOD FOR MANUFACTURING A MULTILAYER TUBULAR FILM
TÊTE DE SOUFFLAGE ET PROCÉDÉ DE FABRICATION D'UNE FEUILLE DE TUYAU MULTICOUCHE

(30) Priorität: 13.10.2018 DE 102018008127
(43) Veröffentlichungstag der Anmeldung: 15.04.2020
(73) Patentinhaber: HOSOKAWA ALPINE Aktiengesellschaft, 86199 Augsburg (DE)
(72) Erfinder: Baier, Christian, 86356 Neusäß (DE); Grimm, Felix, 86391 Stadtbergen (DE); Heinecker, Michael, 86157 Augsburg (DE); Libowski, Joachim, 86356 Neusäß (DE)

(56) Entgegenhaltungen:
- CN-U- 204 183 848
- DE-A1- 2 250 151
- GB-A- 2 253 807
- JP-U- S60 141 229
- US-A1- 2010 173 031

## Beschreibung

Die Erfindung richtet sich auf einen Blaskopf zur Herstellung von Mehrschichtschlauchfolien aus thermoplastischem Kunststoff nach dem Oberbegriff des Anspruchs 1 und einem Verfahren zur Herstellung von Mehrschichtschlauchfolien aus thermoplastischem Kunststoff nach dem Oberbegriff des Anspruchs 13.

Industriell hergestellte Kunststofffolien haben üblicherweise eine Dicke von wenigen Mikrometern bis zu einigen hundert Mikrometern und bestehen aus einer bis elf einzelnen Schichten, deren Einzeldicke im Regelfall nicht weniger als einen Mikrometer beträgt. Neuere Erkenntnisse zeigen, dass Einzelschichten mit einer Dicke von weniger als einem Mikrometer die Eigenschaften von Coextrusionsfolien verbessern. Solche Nanolayerfolien sind aus dem Bereich der Castextrusion bekannt. Im Bereich der Blasfolienextrusion konnte bisher noch kein serientaugliches Extrusionswerkzeug zur wirtschaftlichen Herstellung hochwertiger Nanolayerfolien bereitgestellt werden.

Blasköpfe zur Herstellung von Schlauchfolien sind vorbekannt. Sie haben die Aufgabe Schmelze die ihnen aus einem oder mehreren Extrudern zugeführt werden zu einer ringförmigen Schmelzeströmung zu verteilen und zur Ringspaltdüse des Blaskopfs zu führen.

Ein Blaskopf besteht aus einem zentralen Dorn und einem diesen umgebenden Mantel. Zwischen Mantel und Dorn befinden sich Ringspalte durch die die Schmelze zur Ringspaltdüse transportiert wird. Der Blaskopf weist eine Schmelzezuführung auf, einen Vorverteiler, der den zugeführten Schmelzestrom in mehrere Einzelschmelzen aufteilt, einen oder mehrere Verteiler, der die Schmelze gleichmäßig in die Ringspalte verteilt und zur Ringspaltdüse führt sowie der Ringspaltdüse aus der der Schmelzeschlauch ausgestoßen wird.

Es werden zwei Grundformen von Verteilern unterschieden, der Axialverteiler in konischer oder zylindrischer Form und der Radialverteiler - auch Plattenverteiler genannt.

Ein oft verwendetes Blaskopfkonzept ist der Axialwendelverteiler, wie er in der DE 10 2004 151 A1 offenbart ist. Bei dieser Bauweise sind sowohl Verteiler als auch Zusammenfluss in axialer Richtung, d.h. in Extrusionsrichtung, angeordnet. Bei Coextrusionsblasköpfen sind die zylindrischen oder konischen Axialwendelverteiler konzentrisch zueinander und zum Dorn angeordnet. Diese weisen wendelförmige Nuten auf, die die Schmelze gleichmäßig in den Ringspalten verteilen. Die Schmelze aus den einzelnen Ringspalten werden vor der Ringspaltdüse zusammengeführt und verlassen diese als Schmelzeschlauch. Axialwendelverteiler zeichnen sich durch ihre Druckstabilität und Maßhaltigkeit aus.

Ein weiteres Blaskopfkonzept ist der Radial- oder Plattenverteiler. Bei diesem werden Verteilerplatten übereinander um den Dorn des Blaskopfs angeordnet. Der radial angeordnete Verteiler weist meist die Form einer Spirale auf. Er verteilt die Schmelze und führt sie in einen Ringspalt zwischen Dorn und Verteiler. Die verschiedenen Schmelzeströme werden nacheinander in den Ringspalt geführt. Dieser führt die Schmelze zur Ringspaltdüse. Die Schmelze verlässt die Ringspaltdüse als Schmelzeschlauch.

Der Radialwendelverteiler nutzt eine senkrecht zur Extrusionsrichtung angeordnete Wendelgeometrie, um einen nahtlosen und homogenen Schmelzeschlauch zu erzeugen. Durch eine Reihenschaltung mehrerer Radialwendelverteiler können mehrere Schmelzeströme vergleichsweise einfach zu einem mehrschichtigen Schmelzestrom vereint werden. Aus der DE 10 059 306 C1 ist ein Radialwendelverteiler als radiales Plattenwerkzeug bekannt, bei dem die Kunststoffschmelze von außen eingeleitet wird und radial nach innen fließt.

Aus der EP 2 873 508 A1 ist ein Blaskopf bekannt, der zusätzlich zu einem Axialwendelverteiler einen nachgeordneten Radialverteiler aufweist.

Durch die Erzeugung vieler Nanolayer können gezielt die Eigenschaften der erzeugten Folie verbessert werden. Beispielhaft seien hier die verbesserte Barrierewirkung oder bessere Tiefzieheigenschaften erwähnt. Um die Vorteile dieser sogenannten Nanolayer auch im Bereich der Blasfolienextrusion nutzen zu können, wurden bereits mehrere mögliche Lösungen vorgeschlagen.

Die EP 2 639 038 A1 offenbart einen Blaskopf mit Plattenverteiler zur Herstellung von Folien mit Nanolayerstruktur. Es ist ein aus bearbeiteten Blechen gestapelter Blaskopf zur Erzeugung dünner Schichten.

Durch das Stapeln vieler speziell gefertigter Bleche können kostengünstig dreidimensionale Innenkonturen gefertigt werden. Bedingt durch die Dicke der verwendeten Bleche können bei dieser Fertigung jedoch keine hochwertigen Oberflächen der Folien in Extrusionsrichtung erzeugt werden. Hinterschneidungen und Totzonen im Schmelzekanal lassen sich nicht vermeiden. Weiterhin neigen dünne Bleche zum Verziehen. Zusammen mit den üblichen hohen Drücken, die beim Plattenverteiler bekannter Weise in Extrusionsrichtung wirken, stößt dieses Auslegungskonzept bei Ausstoß und Standzeiten an seine Grenzen. Das System weist gleichdicke Vorverteilerbohrungen und gleichdicke Bleche auf, was zu einer undefinierten Schichtdickenverteilung in der hergestellten Mehrschichtschlauchfolie führt.

In der DE 10 2016 012 388 A1 ist ein Blaskopf und dazugehöriges Verfahren zur Herstellung einer Mehrschichtschlauchfolie offenbart, der einen Radialverteiler aus mehreren Platten zeigt, wobei die Platten Dünnschichtverteilerplatten sind, deren Verteilerplattenaustritt am Umfangsrand eine Höhe von höchstens 0,75 mm aufweist.

In der EP 2 326 481 B1 ist ein Blaskopf mit Radialverteiler und ein dazugehöriges Verfahren zur Herstellung einer Mehrschichtschlauchfolie offenbart, der Verteilerplatten herkömmlicher Dicke mit Mikroschicht-Verteilerplatten kombiniert. Dazu werden zunächst nacheinander die dünnen Schmelzeschichten zusammengeführt und diese dann mit dickeren Schichten kombiniert. Der Verteileraustritt des Mikroschicht-Verteilers weist bei diesem Blaskopf eine Höhe zwischen 0,508 mm und 2,54 mm auf.

In der JP S60 141229 U ist eine Vorrichtung offenbart, die zur Herstellung von schlauchförmigem Material dient, wobei dieses mit um den Umfang in Extrusionsrichtung nebeneinander angeordneten Streifen aus unterschiedlichem Material hergestellt wird.

Die US 2010/173031 A1 zeigt einen Blaskopf zur Herstellung von Mehrschichtschlauchfolien mit mehreren Paketen aus Plattenverteilern, wobei die Plattenverteiler dazu ausgebildet sind Schichten unterschiedlicher Dicke herzustellen.

Für die Erzeugung dünner Schmelzeschichten ist ein Plattenverteilerpaket sehr gut geeignet, da er kleine Schmelzevolumina und kurze Fließwege ermöglicht. Durch die sofortige Vereinigung der Schmelzeströme nach dem Austritt aus dem Verteilerschmelzekanal entfällt der bei Axialverteilern übliche Weg durch die Zusammenflussgeometrie. So kann auch bei geringen Massedurchsätzen eine ausreichend hohe Fließgeschwindigkeit realisiert werden. Ein Nachteil der Plattenverteiler-Coextrusion ist, dass der gemeinsame Fließweg der Polymerschmelzen vergleichsweise lang ist. Es ist bekannt, dass Polymere bei langen gemeinsamen Fließwegen Fließinhomogenität ausbilden können, wodurch die Schichtdickenverteilung negativ beeinflusst wird. Weiterhin ist bekannt, dass empfindliche Polymere bei langen gemeinsamen Fließwegen und den damit verbundenen thermischen und stofflichen Austauschvorgängen geschädigt werden können. Bevorzugt treten diese Effekte auf, wenn die Einzelschichten über geringe Dicken, große Grenzflächen und lange gemeinsame Fließwege verfügen.

Der Erfindung liegt daher die Aufgabe zugrunde, eine Lösung zu schaffen, die die Vorteile von Axialverteilern und von Radialverteilern in einem Blaskopf kombiniert.

Bei einem Blaskopf der eingangs beschriebenen Art, wird die Aufgabe erfindungsgemäß dadurch gelöst, dass mindestens ein Verteiler ein Axialverteiler ist und mindestens ein Verteiler ein Plattenverteiler ist, wobei der Plattenverteiler in einem Ringelement des Axialverteilers vor der Schmelzezusammenführung zur Ringspaltdüse angeordnet ist.

Erfindungsgemäß wird hierfür ein Blaskopf mit Axialverteiler als Grundlage bereitgestellt. Dabei werden ein oder mehrere Schmelzekanäle nicht über einen Axialverteiler mit Schmelze gespeist, sondern durch einen Radialverteiler - auch Plattenverteiler genannt - ersetzt. Dazu werden eine oder mehrere Verteilerplatten zu einem Plattenverteilerpaket zusammengefasst und so in den Blaskopf eingebaut, dass diese den Schmelzekanal speisen anstatt der Wendel des Axialverteilers.

Der Schichtaufbau im Plattenverteilerpaket kann bezüglich Dicke und zugeführte Schmelzeart auf den jeweiligen Anwendungsfall angepasst sein. Diese werden von einem oder mehreren Extrudern, vorzugsweise von zwei Extrudern gespeist. Beispielsweise wird bei der Speisung eines mehrschichtigen Plattenverteilerpaketes mit zwei Extrudern ein alternierender Schichtaufbau erzielt. Die mithilfe des Plattenverteilerpaketes erzeugten Schichtströmungen werden nacheinander zusammengeführt und im weiteren Verlauf in Extrusionsrichtung mit den Schmelzeströmen aus dem Axialverteiler zusammengeführt. Die Zusammenführung der Schmelzeströmungen kann gleichzeitig oder nacheinander erfolgen. Im Anschluss daran werden sie zur Ringspaltdüse geführt. Die Schmelze wird über einen oder mehrere Schmelzezuführeinrichtungen in den Blaskopf geführt.

In einer Ausführungsform der Erfindung ist die Höhe eines jeden Schmelzekanals des Plattenverteilers kleiner als die Breite eines jeden Schmelzkanals des Axialverteilers.

Die Schmelzeschichten, die in den Axialverteilern gebildet werden, können aus gleichem oder unterschiedlichem Material bestehen. Die Schichten können gleiche oder unterschiedliche Dicken aufweisen. Dazu wird die Schmelze über eine oder mehrere Schmelzezuführeinrichtungen in den Blaskopf geführt.

Die Anzahl der Schichten im Plattenverteiler kann von 1 bis 30 und darüber hinaus variieren, währen die Anzahl der Schichten des Axialverteilers bei 1 bis 11 liegt. Es können aber auch mehr gewählt werden. Die einzelnen Schichten aus beiden Verteilern können aus einem Material oder unterschiedlichen Materialien bestehen.

Je nach zu erzeugender Folie ist eine Anordnung des Plattenverteilerpaketes an den äußeren oder inneren Schmelzekanälen oder an Kanälen dazwischen vorgesehen. Dazu wird im Blaskopf das entsprechende Ringelement mit axialem Wendel durch ein Bauteil mit Plattenverteiler ersetzt. Es entstehen so Folienstrukturen, bei denen die Nanolayer-Struktur im Innern, an der Außen- oder Innenseite der Schlauchfolie angeordnet ist.

In einer Ausgestaltung der Erfindung weist der Blaskopf zwei Axialverteiler auf zwischen denen ein Schmelzekanal mit einem Plattenverteiler angeordnet ist.

Der Blaskopf kann auch mit mehreren Plattenverteilerpaketen ausgestattet sein. Sie werden in Reihe oder parallel betrieben.

Im Reihenbetrieb werden dafür mehrere Plattenverteilerpakete in Extrusionsrichtung nachfolgend an einem Schmelzekanal angeordnet.

Im Parallelbetrieb werden dafür an zwei oder mehr Schmelzekanälen Plattenverteilerpakete angeordnet.

Der Parallelbetrieb kann auch mit dem Reihenbetrieb kombiniert werden.

In einer weiteren Ausführungsart sind ein Axialwendelverteiler und ein Plattenverteilerpaket übereinander angeordnet, wobei sie ihre Schmelze in denselben Schmelzekanal entladen.

Ein Plattenverteilerpaket kann auch nach der Zusammenführung der Schmelzekanäle angeordnet sein und direkt vor der Ringspaltdüse ihre Schmelze auf den in Extrusionsrichtung fließenden Schmelzestrom entladen.

Der Fluss der Schmelze verläuft im Plattenverteilerpaket von der Vorverteilung zum Zusammenfluss mit den weiteren Schmelzen im Schmelzekanal.

Er kann radial von innen nach außen oder von außen nach innen gerichtet sein.

Zur Montage des Plattenverteilerpakets im Blaskopf werden zunächst die Plattenverteilerplatten mittels lösbarer Verbindungselemente, wie Schraubverbindungen, zu einem Verteilerplattenpaket verspannt. Dieses Paket wird anstelle eines Axialwendels in ein Ringelement verbaut und konzentrisch in den Blaskopf integriert.

Ein Vorteil dieser Lösung ist die vergleichsweise einfache Integration in das bestehende und bewährte Konzept des Axialverteilerblaskopfes, welche es ermöglicht bekannte Vorteile, wie etwa die Druckbeständigkeit konzentrischer Axialverteiler, auf das Konzept der Radialverteiler zu übertragen.

Durch den vergleichsweise einfachen Austausch weniger Bauteile können etwa bestehende Axialverteilerblasköpfe um eine oder mehrere Schichten aus einem Plattenverteiler ergänzt bzw. nachgerüstet werden.

Das Ringelement, in das das Plattenpaket eingebaut wird, ist modular aus einem Grundringelement, dem Plattenverteilerpaket und einem Einbauring aufgebaut. Durch diesen modularen Aufbau kann das Plattenverteilerpaket, der Vorverteiler und die Schmelzezuführung zwischen Vorverteiler und Plattenverteilerpaket leicht ausgetauscht werden und an die geforderte Folienart hinsichtlich Dicke, Materialarten und -anzahl sowie Schichtzahl angepasst werden.

Die Schmelzeströme aus dem Plattenverteilerpaket werden zunächst nacheinander zu einem Schmelzestrom zusammengeführt und dann mit den Schmelzeströmen aus dem Axialverteiler vereint. Die Schmelzeströme können einen gemeinsamen oder einen mehrstufigen Zusammenfluss besitzen. Dieser befindet sich in Fließrichtung möglichst nahe am Blaskopfausgang, der Ringspaltdüse.

Lange gemeinsame Fließwege verschiedener in Kontakt befindlicher Polymerschmelzen können zu negativen Auswirkungen auf die Qualität der Coextrusionsfolie führen. Vor allem durch das bei Dünnschichten bewusst groß gewählte Verhältnis von Oberfläche zu Volumen können diese Schichten für Grenzflächeneffekte anfällig sein. Durch einen in Fließrichtung möglichst späten Zusammenfluss der Schmelzeströmungen kann ein stofflicher und thermischer Ausgleich der Schichten minimiert werden. Dazu erfolgt beispielsweise eine kompakte Zusammenführung der einzelnen Schmelzeströmungen mit dem bereits ausgebildeten Dünnschichtblock. Auf diese Weise kann ein weiterer Vorteil der Axialverteilertechnologie für die Dünnschichttechnologie genutzt werden.

Die Zusammenflüsse der Schmelzeschichten aus dem Plattenverteilerpaket können senkrecht oder im spitzen Winkel auf den jeweiligen Schmelzekanal treffen in den sie münden. Bevorzugt beträgt der Winkel zwischen 20° und 45°. Idealerweise beträgt der Winkel zwischen 30° und 40°.

Durch die im Verhältnis zum Volumen große Oberfläche der Schmelzeströmungen im Plattenverteiler wird der thermische Austausch zwischen Blaskopf und Schmelze, beziehungsweise zwischen den einzelnen Schmelzeschichten begünstigt. Je nach Auswahl der verarbeiteten Polymerschmelzen und der gewählten Verfahrensparameter kann ein unerwünschter Wärmeübergang die Verarbeitung der Polymere erschweren und die Qualität der entstehenden Folie verschlechtern. Durch eine gezielte Temperierung oder eine thermische Isolation der Elemente der Verteiler voneinander wird dies verhindert.

In einer Ausgestaltung der Erfindung ist der Verteiler der inneren Schmelzeschlauchschicht in der Außenwand des inneren Ringelements dem Dorn, das den inneren Schmelzekanal begrenzt, angeordnet. In einer weiteren Ausgestaltung der Erfindung ist der Verteiler der äußeren Schmelzeschlauchschicht in der Innenwand des äußeren Ringelements, dem Gehäuse des Blaskopfs, das den äußeren Schmelzekanal begrenzt, angeordnet. Dabei kann der Verteiler ein Axialverteiler oder ein Radialverteiler d. h. ein Plattenverteiler sein.

Es können auch beide Ausgestaltungen kombiniert werden.

Bevorzugt ist der Axialverteiler mit einzelnen invertierten Wendeln versehen, d.h. der Wendel ist nicht in der Außenseite des Ringelements angeordnet, sondern in der Innenseite. Vorzugsweise kann der äußere Wendel in der Gehäusewand als invertierter Wendel ausgeführt werden. Dies verhindert die Bildung von Wendelsteifen und erhöht so die Qualität der Folie.

Bei dem Einbringen der Schichten in die innerste Schlauchfoliensicht entlädt sich der Plattenverteiler von innen nach außen in den innersten Schmelzekanal. Werden die Schichten hingegen in die äußere Schlauchfoliensicht eingebracht, entlädt sich der Plattenverteiler von außen nach innen in den äußersten Schmelzekanal.

In einer weiteren Ausgestaltung der Erfindung sind die Querschnitte im Plattenverteilerpaket so gewählt, dass jeder Schmelzestrom im vorgesehenen Betriebszustand einem ähnlich hohen Druckverlust unterliegt. Durch die sich einstellenden rheologisch ähnlichen Verhältnisse wird eine gleichmäßige Schichtverteilung erzielt. In einem anderen Fall können gezielt unterschiedliche Schichtdicken erzeugt werden, indem unterschiedliche Druckverluste vorgegeben werden. Die geometrischen Anpassungen können beispielsweise in der Vorverteilung, in der Zuführung vom Vorverteiler zu den Plattenverteilerkanälen, der Verteilergeometrie oder dem Zusammenfluss der Schmelzeströme vorgenommen werden.

Bei einem Verfahren der eingangs beschriebenen Art, wird die Aufgabe erfindungsgemäß dadurch gelöst, dass die Schichten einer Mehrschichtschlauchfolie aus thermoplastischem Kunststoff sowohl in einem Axialverteiler und in einem Plattenverteiler, der seine Schmelze in den Schmelzekanal des Axialverteilers entlädt, hergestellt werden.

Dabei werden im Blaskopf Schmelzeschichten aus einem Axialverteiler mit Schmelzeschichten aus einem Plattenverteiler kombiniert.

Letztere werden im nachgeordneten Schmelzekanal nacheinander zu einer SchichtStruktur zusammengeführt. Dieser zusammengeführte Schmelzestrom wird dann mit den Schmelzeströmen aus den Axialverteilern zusammengeführt. Die Schmelzeströme aus den Plattenverteilern können aber auch direkt auf einen Schmelzestrom aus dem Axialverteiler gelegt werden.

Auch Blasköpfe mit mehreren Plattenverteilern in Reihen- oder Parallelbetrieb sind möglich.

Im Reihenbetrieb werden dafür mehrere Plattenverteilerpakete übereinander an einem Schmelzekanal angeordnet.

Im Parallelbetrieb werden dafür an zwei oder mehreren Schmelzekanälen Plattenverteilerpakete angeordnet.

Der Parallelbetrieb kann auch mit dem Reihenbetrieb kombiniert werden.

Es kann auch ein Axialverteiler und Plattenverteilerpaket übereinander angeordnet werden, die ihre Schmelze in denselben Schmelzekanal entladen.

Die Kombination der Nanolayer-Technologie mit den Vorteilen der Blasfolienextrusion bietet ein großes Potential für die wirtschaftliche und resourcenschondende Herstellung von Folien mit verbesserten Eigenschaften und geringer Dickentoleranz.

Das hier vorgeschlagene Blaskopfkonzept baut auf der erprobten Bauform des Axialwendelverteilers auf und kombiniert dabei auf sinnvolle Weise axiale und radiale Bauformen.

Weitere Einzelheiten, Merkmale und Vorteile des Gegenstandes der Erfindung ergeben sich aus den Unteransprüchen sowie aus der nachfolgenden Beschreibung der zugehörigen Zeichnungen, in der - beispielhaft - ein bevorzugtes Ausführungsbeispiel der Erfindung dargestellt ist.

In den Zeichnungen zeigt:
Figur 1: Einen erfindungsgemäßen Blaskopf.
Figur 2: Einen erfindungsgemäßen Blaskopf mit Plattenverteiler im Parallelbetrieb
Figur 3: Einen erfindungsgemäßen Blaskopf mit Plattenverteiler im Reihenbetrieb

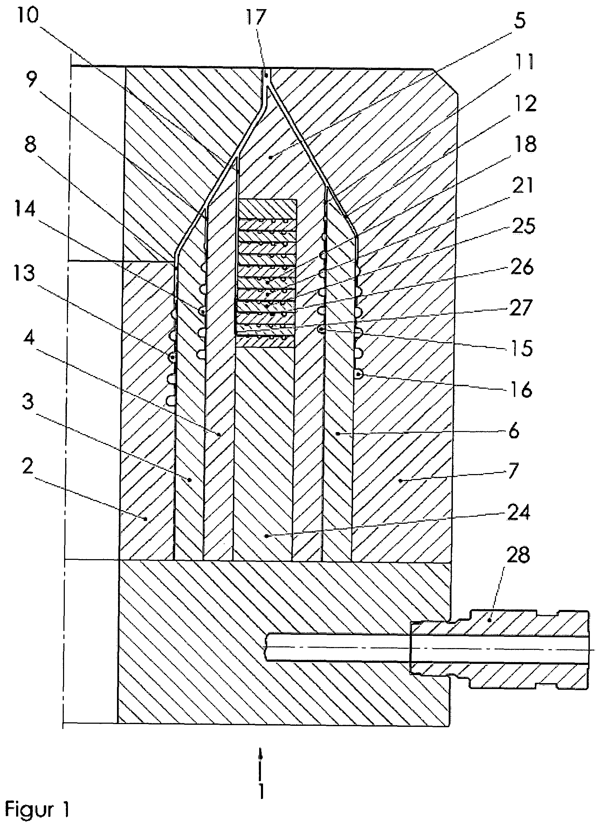

In der Figur 1 ist ein erfindungsgemäßer Blaskopf in einer bevorzugten Ausführungsform im Schnitt dargestellt.

Der Blaskopf (1) kombiniert einen Axialverteiler mit einem Plattenverteiler. Der Blaskopf (1) umfasst einen inneren zylindrischen Dorn (2). Der Dorn (2) wird in diesem Ausführungsbeispiel von konzentrischen Ringelementen (3, 4, 5, 6, 7) umgeben, wobei das äußerste Ringelement (7) gleichzeitig das Gehäuse darstellt. Der Dorn (2) stellt selbst auch ein Ringelement dar. Zwischen dem Dorn (2) und dem inneren Ringelement (3), sowie zwischen den einzelnen Ringelementen sind Ringspalte, die Schmelzekanäle (8, 9, 10, 11, 12) ausgebildet. Der Dorn (2), das erste (3) und das dritte Ringelement (5) weisen auf ihrer äußeren Mantelfläche einen Wendel (13, 14, 15) auf. Das sechste Ringelement (7), das Gehäuse, weist einen Wendel (16) auf seiner inneren Mantelfläche auf. Die Tiefe der Wendeln (13, 14, 15, 16) nimmt in Richtung Ringspaltdüse (17) ab. Das zweite (4) und vierte Ringelement (6) weisen keine Wendeln auf, sie haben glatte Mantelflächen. Das dritte Ringelement (5) weist einen Plattenverteiler (18) auf. Es hat an seiner inneren Mantelfläche eine Aussparung für ein Plattenverteilerpaket (21) und weist einen Einbauring (24) auf. Das Plattenverteilerpaket (21) umfasst mehrere Verteilerplatten (25), die das Plattenverteilerpaket (21) bilden und Schmelzezuführungen (hier nicht gezeigt) auf. Zwischen diesen sind Plattenverteilerschmelzekanäle (26) angeordnet. Der Plattenverteiler (18) besitzt eine Schmelzezuführung (hier nicht sichtbar), Spiralverteiler, Schmelzekanäle (26) und Schmelzeaustritte (27). Die Verteilerplatten (25) werden über eine Schraubenverbindung oder eine andere lösbare Verbindung miteinander verbunden und auf dem Einbauring (24) fixiert. Das Plattenverteilerpaket (21) mit Einbauring (24) wird dann mit dem dritten Ringelement (5), dem Grundringelement in den Blaskopf (1) eingebaut. Das Plattenverteilerpaket (21) entlädt seine Schmelzeströme aus den Plattenverteilerschmelzekanälen (26) nacheinander in den Schmelzekanal (10). Die Schmelzekanäle (8, 9, 10, 11, 12) werden vor der Ringspaltdüse (17) zu einem Spalt zusammengefasst.

Die Schmelze wird über mehrere Schmelzezuführeinrichtungen (28) in den Blaskopf (1) transportiert, dort über verschiedene Vorverteiler (hier nicht gezeigt), zum Anfang der Wendeln (13, 14, 15, 16,) und des Plattenverteilers (18) gefördert.

Durch den Axialverteiler, hier eine Axialwendelverteiler, wird die Schmelze gleichmäßig über den Umfang der entsprechenden Schmelzekanäle (8, 9, 11, 12) verteilt und in Richtung Ringspaltdüse (17) gefördert. Ein weiterer Schmelzstrom wird über einen Vorverteiler (nicht gezeigt) dem Plattenverteilerpaket (21) zugeführt und in diesem so verteilt, dass er als gleichmäßiger Schmelzschlauchstrom über die Verteileraustritte (27) in den Schmelzekanal (10) austritt. Der Plattenverteiler ist so konzentrisch im Axialverteiler angeordnet. Im Schmelzekanal (10) werden die Schmelzeströme aus den einzelnen Plattenverteilerschmelzekanälen (26) nacheinander zusammengeführt. Dieser zusammengeführte Schmelzstrom wird nun nacheinander mit den Schmelzeströmen aus den Schmelzekanälen (8, 9,11,12) zusammengeführt und zur Ringspaltdüse (17) geführt, wo der Schmelzestrom als mehrschichtiger Schmelzeschlauch austritt.

Da die Wendelentladung der außenliegenden Schichten des Schmelzeschlauchs, d.h. innere und äußere Schicht, in Richtung Schmelzeschlauchmitte stattfindet, welche anschließend mit der Schmelze der anderen Schichten in Kontakt treten, ist eine Herstellung einer Mehrschichtfolie ohne Streifen und wellige Bereiche realisierbar.

Soll ein erfindungsgemäßer Blaskopf für Mehrschichtschlauchfolien von mehr als 5 dicken Schichten verwendet werden, werden zwischen dem äußeren Ringelement und dem Dorn entsprechend weitere Ringelemente angeordnet. Soll ein erfindungsgemäßer Blaskopf Mehrschichtschlauchfolien mit weniger als 5 dicken Schichten hergestellt werden, werden zwischen dem äußeren und Dorn entsprechend weniger Ringelemente angeordnet.

Der Plattenverteiler kann ebenfalls in der Anzahl der Schichten angepasst werden, indem mehr oder weniger Patten Anwendung finden.

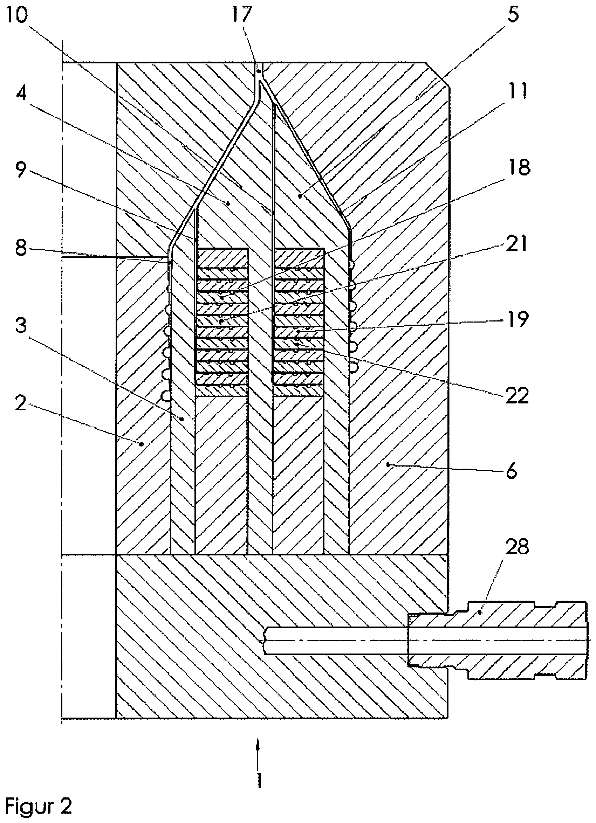

Figur 2 zeigt einen Blaskopf (1) im Parallelberieb. In Vergleich zum Blaskopf aus Figur 1 weist dieser Blaskopf (1) zwei Plattenverteiler (18, 19) auf. Ein Plattenverteiler (18) ist im Ringelement (4) angeordnet, das dazugehörige Plattenverteilerpaket (21) entlädt die Schmelze in den Schmelzekanal (9). Der zweite Plattenverteiler (19) ist im Ringelement (5) angeordnet. Das Plattenverteilerpaket (22) des Verteilers (19) entlädt die Schmelze in den Schmelzekanal (10). Dieser Schmelzestrom wird nacheinander mit den Schmelzeströmen aus den anderen Schmelzekanälen (8, 9, 11) zusammengeführt und zur Ringspaltdüse (17) geführt, um als Schmelzeschlauch den Blaskopf (1) zu verlassen.

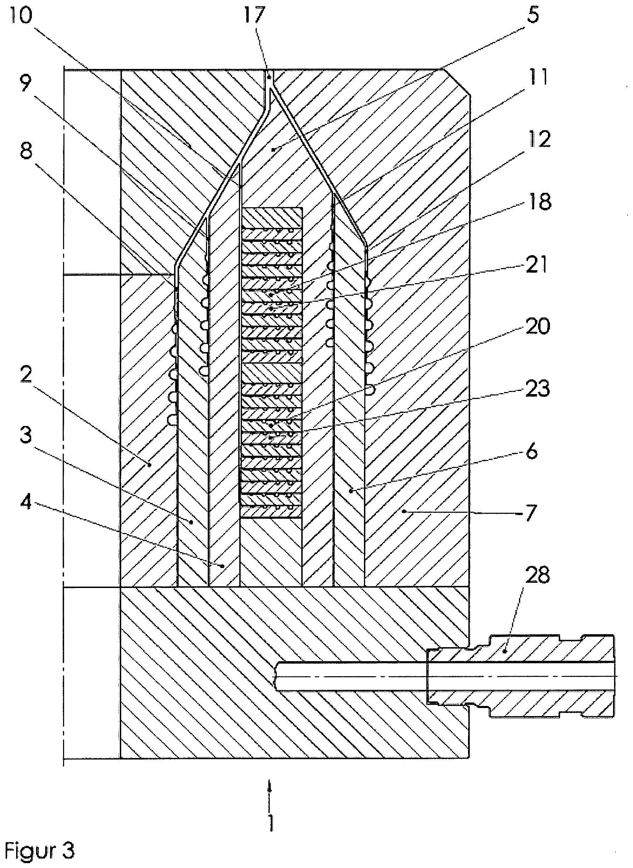

Figur 3 zeigt einen Blaskopf (1) im Reihenbetrieb. Er weist ebenfalls zwei Plattenverteiler (18, 20) auf. Die Plattenverteiler (18) und (20) sind übereinander im selben Ringelement (5) angeordnet. Beide Plattenverteilerpakete (21) und (23) entladen ihre Schmelze in denselben Schmelzekanal (10). Dieser Schmelzestrom wird nacheinander mit den Schmelzeströmen aus den Schmelzekanälen (8, 9, 11, 12) zusammengeführt und zur Ringspaltdüse (17) geführt, um als Schmelzeschlauch den Blaskopf (1) zu verlassen.

### Bezugszeichen

1 Blaskopf
2 Dorn
2, 3, 4, 5, 6, 7 Ringelemente
8, 9, 10, 11, 12 Schmelzekanäle
13, 14, 15, 16 Wendeln
17 Ringspaltdüse
18, 19, 20 Plattenverteiler
21, 22, 23 Plattenverteilerpaket
24 Einbauring
25 Verteilerplatten
26 Plattenverteilerschmelzekanäle
27 Plattenverteilerschmelzeaustritt
28 Schmelzezuführeinrichtung

## Patentansprüche

1. Blaskopf (1) zur Herstellung von Mehrschichtschlauchfolien aus thermoplastischem Kunststoff umfassend eine oder mehrere Schmelzezuführeinrichtungen (28), ein oder mehrere konzentrisch um die Mittelachse des Blaskopfes (1) angeordneten Schmelzekanäle (8, 9, 10, 11, 12) mit Verteilern, wobei die Schmelzekanäle (8, 9, 10, 11, 12) von Ringelementen (2, 3, 4, 5, 6, 7) begrenzt werden und eine Ringspaltdüse (17) in die die Schmelzekanäle (8, 9, 10, 11, 12) münden, **dadurch gekennzeichnet, dass** mindestens ein Verteiler ein Axialwendelverteiler ist und mindestens ein Verteiler ein Plattenverteiler mit Spiralverteiler ist, wobei der Plattenverteiler (18) in einem Ringelement (2, 3, 4, 5, 6, 7) des Axialwendelverteilers vor der Schmelzezusammenführung zur Ringspaltdüse (17) angeordnet ist.

2. Blaskopf (1) nach Anspruch 1, **dadurch gekennzeichnet, dass** der Plattenverteiler (18) eine oder mehrere Plattenverteilerplatten (25) mit dazwischen angeordneten Schmelzekanälen (26) aufweist.

3. Blaskopf (1) nach Anspruch 1 und 2, **dadurch gekennzeichnet, dass** der Blaskopf (1) Plattenverteiler (18, 19, 20) aufweist, die an unterschiedlichen Schmelzekanälen (8, 9, 10, 11, 12) angeordnet sind.

4. Blaskopf nach Anspruch 1 und 2, **dadurch gekennzeichnet, dass** der Blaskopf (1) Plattenverteiler (18, 19, 20) aufweist, die am selben Schmelzekanal (8, 9, 10, 11, 12) übereinander oder gegenüberliegend angeordnet sind.

5. Blaskopf (1) nach Anspruch 1 und 2, **dadurch gekennzeichnet, dass** der Blaskopf (1) Plattenverteiler und Axialverteiler aufweist, die am selben Schmelzekanal (8, 9, 10, 11, 12) angeordnet sind.

6. Blaskopf (1) nach einem oder mehreren der vorangegangenen Ansprüche, **dadurch gekennzeichnet, dass** das Ringelement (3, 4, 5, 6, 7) mit Plattenverteiler (18, 19, 20) modular aus Grundringelement, Plattenverteilerpaket (21, 22, 23) und Einbauring (24) aufgebaut ist.

7. Blaskopf (1) nach einem oder mehreren der vorangegangenen Ansprüche, **dadurch gekennzeichnet, dass** der Blaskopf (1) mit einem Plattenverteiler (18, 19, 20) nachrüstbar ist.

8. Blaskopf (1) nach einem oder mehreren der vorangegangenen Ansprüche, **dadurch gekennzeichnet, dass** der Zusammenfluss der Schmelze aus dem Plattenverteilerkanälen (26) in den Schmelzekanal (8, 9, 10, 11, 12) in einem spitzen Winkel ausgeführt ist.

9. Blaskopf (1) nach einem oder mehreren der vorangegangenen Ansprüche, **dadurch gekennzeichnet, dass** der Axial- oder Plattenverteiler der äußeren Schmelzekanäle (8, 12) an der Innenwand des Gehäuses (7) und / oder an der Außenwand des Dorns (2) angeordnet ist.

10. Blaskopf (1) nach einem oder mehreren der vorangegangenen Ansprüche, **dadurch gekennzeichnet, dass** die Schichtdickenverteilung in der Schlauchfolie über die Druckverluste in den Axialverteiler und Plattenverteilern eingestellt werden.

11. Blaskopf (1) nach Anspruch 10 **dadurch gekennzeichnet, dass** die Druckverluste über die Querschnitte in den Axialverteilern und Plattenverteiler eingestellt wird.

12. Blasfkopf (1) nach Anspruch 11 **dadurch gekennzeichnet, dass** die Anpassung der Querschnitte der Axialverteiler und Plattenverteiler in der Vorverteilung, in der Zuführung vom Vorverteiler zu den Axial- und Radialverteilerkanälen, der Verteilergeometrie und / oder dem Zusammenfluss der Schmelzeströme erfolgen.

13. Verfahren zur Herstellung von Mehrschichtschlauchfolien aus thermoplastischem Kunststoff in einer Blasfolienanlage **dadurch gekennzeichnet, dass** im Blaskopf der Blasfolienanlage mindesten eine der Schichten der Mehrschichtschlauchfolie aus einer oder mehreren Schichten in einem Axialwendelverteiler gebildet werden und eine oder mehrere Schichten in einem Plattenverteilern mit Spiralverteiler gebildet werden, wobei der Plattenverteiler seine Schmelze in einen Axialwendelverteiler entlädt.

14. Verfahren nach Anspruch 13 **dadurch gekennzeichnet, dass** die Plattenverteiler (18, 19, 20) im Blaskopf (1) im Parallelbetrieb betrieben werden.

15. Verfahren nach Anspruch 13 **dadurch gekennzeichnet, dass** die Plattenverteiler (18, 19, 20) im Blaskopf (1) im Reihenbetrieb betrieben werden.

16. Verfahren nach Anspruch 13 **dadurch gekennzeichnet, dass** die Plattenverteiler (18, 19, 20) im Blaskopf (1) in einer Kombination aus Reihenbetrieb und Parallelbetrieb betrieben werden.

17. Verfahren nach einem oder mehreren der Ansprüche 13 bis 16 **dadurch gekennzeichnet, dass** ein Blaskopf (1) nach einem oder mehreren der Ansprüche 1 bis 12 eingesetzt wird.

## Claims

1. Die head (1) for the production of multilayer tubular film made of thermoplastic polymers comprising one or more melt feeders (28), one or more melt channels (8, 9, 10, 11, 12) arranged concentrically around the centre axis of the die head (1) with distributors, whereby the melt channels (8, 9, 10, 11, 12) are delimited by annular elements (2, 3, 4, 5, 6, 7) and a ring-shaped die (17) into which the melt channels (8, 9, 10, 11, 12) discharge, **characterised in that** at least one distributor is an axial spiral distributor and at least one distributor is a plate distributor with spiral distributor, whereby the plate distributor (18) is located in an annular element (2, 3, 4, 5, 6, 7) of the axial spiral distributor upstream of where the melt merges into the ring-shaped die (17).

2. Die head (1) in accordance with Claim 1, **characterised in that** the plate distributor (18) has one or more plate distributor plates (25) with melt channels (26) located in between.

3. Die head (1) in accordance with Claim 1 and 2, **characterised in that** the die head (1) is equipped with plate distributors (18, 19, 20) which are located at different melt channels (8, 9, 10, 11, 12).

4. Die head (1) in accordance with Claim 1 and 2, **characterised in that** the die head (1) is equipped with plate distributors (18, 19, 20) which are located at the same melt channel (8, 9, 10, 11, 12) either on top of or opposite each other.

5. Die head (1) in accordance with Claim 1 and 2, **characterised in that** the die head (1) is equipped with plate distributors and axial distributors which are located at the same melt channel (8, 9, 10, 11, 12).

6. Die head (1) in accordance with one or more of the previous claims, **characterised in that** the annular element (3, 4, 5, 6, 7) with plate distributor (18, 19, 20) is designed in a modular way to comprise a base annular element, a plate distributor stack (21, 22, 23) and a mounting ring (24).

7. Die head (1) in accordance with one or more of the previous claims, **characterised in that** the die head (1) can be retrofitted with a plate distributor (18, 19, 20).

8. Die head (1) in accordance with one or more of the previous claims, **characterised in that** the merging of the melt from the plate distributor channels (26) into the melt channel (8, 9, 10, 11, 12) takes place at an acute angle.

9. Die head (1) in accordance with one or more of the previous claims, **characterised in that** the axial or plate distributor of the outside melt channels (8, 12) is located at the inside wall of the housing (7) and/or at the outside wall of the mandrel (2).

10. Die head (1) in accordance with one or more of the previous claims, **characterised in that** the layer thickness distribution in the tubular film can be adjusted as a function of the pressure drops in the axial distributor and the plate distributors.

11. Die head (1) in accordance with Claim 10, **characterised in that** the pressure drops are adjusted across the cross-sections in the axial distributors and the plate distributor.

12. Die head (1) in accordance with Claim 11, **characterised in that** adjustment of the cross-sections of the axial distributor and the plate distributor take place in the predistributor, in the feed line from predistributor to the axial and radial distribution channels, the distribution geometry and/or the merging of the melt streams.

13. Process for the production of multilayer tubular film made of thermoplastic polymers in a blown film line, **characterised in that** at least one of the layers of the multilayer film tube is formed from one or several layers in an axial spiral distributor and one or more layers in a plate distributor with spiral distributor, whereby the plate distributor discharges its melt into an axial spiral distributor.

14. Process in accordance with Claim 13, **characterised in that** the plate distributors (18, 19, 20) in the die head (1) are operated in parallel mode.

15. Process in accordance with Claim 13, **characterised in that** the plate distributors (18, 19, 20) in the die head (1) are operated in series mode.

16. Process in accordance with Claim 13, **characterised in that** the plate distributors (18, 19, 20) in the die head (1) are operated in a combination of parallel and series mode.

17. Process in accordance with one or more of the Claims 13 to 16, **characterised in that** a die head (1) is employed as defined in one or more of the Claims 1 to 12.

## Revendications

1. Tête de soufflage (1) pour la fabrication de films tubulaires multicouches en matière thermoplastique, comprenant un ou plusieurs dispositifs d'alimentation en matière fondue (28), un canal, ou plusieurs canaux pour la matière fondue avec distributeurs (8, 9, 10, 11, 12) disposés concentriquement autour de l'axe central de la tête de soufflage (1), les canaux pour la matière fondue (8, 9, 10, 11, 12) étant limités par des éléments annulaires (2, 3, 4, 5, 6, 7) et une buse à fente annulaire (17) dans laquelle débouchent les canaux pour la matière fondue (8, 9, 10, 11, 12), **caractérisée par le fait qu'**au minimum un distributeur est un distributeur hélicoïdal axial, et au minimum un distributeur est un distributeur à plaques avec distributeur en spirale, le distributeur à plaques (18) étant disposé dans un élément annulaire (2, 3, 4, 5, 6, 7) du distributeur hélicoïdal axial avant l'arrivée de la matière fondue dans la buse à fente annulaire (17).

2. Tête de soufflage (1) suivant la revendication 1, **caractérisée par le fait que** le distributeur à plaques (18) comprend une ou plusieurs plaques du distributeur à plaques (25) avec des canaux pour la matière fondue (26) disposés entre les plaques.

3. Tête de soufflage (1) suivant les revendications 1 et 2, **caractérisée par le fait que** la tête de soufflage (1) comprend des distributeurs à plaques (18, 19, 20) qui sont disposés à des différents canaux pour la matière fondue (8, 9, 10, 11, 12).

4. Tête de soufflage (1) suivant les revendications 1 et 2, **caractérisée par le fait que** la tête de soufflage (1) comprend des distributeurs à plaques (18, 19, 20) qui sont disposés l'un au-dessus de l'autre ou en vis-à-vis au même canal pour la matière fondue (8, 9, 10, 11, 12).

5. Tête de soufflage (1) suivant les revendications 1 et 2, **caractérisée par le fait que** la tête de soufflage (1) comprend des distributeurs à plaques et des distributeurs hélicoïdaux axiaux qui sont disposés au même canal pour la matière fondue (8, 9, 10, 11, 12).

6. Tête de soufflage (1) suivant une ou plusieurs des revendications précédentes, **caractérisée par le fait que** l'élément annulaire (3, 4, 5, 6, 7) avec le distributeur à plaques (18, 19, 20) est composé de manière modulaire de l'élément de base, du jeu du distributeur à plaques (21, 22, 23) et de l'anneau de montage (24).

7. Tête de soufflage (1) suivant une ou plusieurs des revendications précédentes, **caractérisée par le fait que** la tête de soufflage (1) peut être rattrapée avec un distributeur à plaques (18, 19, 20).

8. Tête de soufflage (1) suivant une ou plusieurs des revendications précédentes, **caractérisée par le fait que** la confluence de la matière fondue provenant des canaux du distributeur à plaques (26) dans le canal pour la matière fondue (8, 9, 10, 11, 12) est réalisé sous forme d'angle aigu.

9. Tête de soufflage (1) suivant une ou plusieurs des revendications précédentes, **caractérisée par le fait que** le distributeur hélicoïdal axial ou le distributeur à plaques des canaux pour la matière fondue extérieurs (8, 12) est disposé à la paroi interne du carter (7) et/ou à la paroi externe du mandrin (2).

10. Tête de soufflage (1) suivant une ou plusieurs des revendications précédentes, **caractérisée par le fait que** la répartition de l'épaisseur des couches dans le film tubulaire peut être réglée par les pertes de pression dans les distributeurs hélicoïdaux axiaux et les distributeurs à plaques.

11. Tête de soufflage (1) suivant la revendication 10, **caractérisée par le fait que** les pertes de pression sont réglées via les sections transversales dans les distributeurs hélicoïdaux axiaux et les distributeurs à plaques.

12. Tête de soufflage (1) suivant la revendication 11, **caractérisée par le fait que** l'adaptation des sections transversales des distributeurs hélicoïdaux axiaux et des distributeurs à plaques est réalisée dans la zone de prérépartition, de l'alimentation du prérépartiteur vers les canaux axiaux et radiaux de répartition, par la géométrie de répartition et/ou la confluence des matières fondues.

13. Procédé pour la fabrication de films tubulaires multicouches en matière thermoplastique dans une installation de films soufflés, **caractérisé par le fait qu'**au minimum une des couches du film tubulaire dans la tête de soufflage de l'installation de films soufflés est formée d'une ou plusieurs couches dans un distributeur hélicoïdal axial et qu'une ou plusieurs couches est formée dans un distributeur à plaques avec distributeur en spirale, la matière fondue du distributeur à plaques débouche dans un distributeur hélicoïdal axial.

14. Procédé suivant la revendication 13, **caractérisé par le fait que** les distributeurs à plaques (18, 19, 20) dans la tête de soufflage (1) fonctionnent en parallèle.

15. Procédé suivant la revendication 13, **caractérisé par le fait que** les distributeurs à plaques (18, 19, 20) dans la tête de soufflage (1) fonctionnent en série.

16. Procédé suivant la revendication 13, **caractérisé par le fait que** les distributeurs à plaques (18, 19, 20) dans la tête de soufflage (1) fonctionnent en mode combiné en parallèle et en série.

17. Procédé suivant une ou plusieurs des revendications 13 à 16, **caractérisé par le fait qu'**une tête de soufflage (1) suivant une ou plusieurs des revendications 1 à 12 est utilisée.
